# EUROPEAN PATENT SPECIFICATION

(11) **EP 4 369 653 B1**
(45) Date of publication and mention of the grant of the patent: **07.10.2026**
(21) Application number: 21952194.5
(22) Date of filing: 03.08.2021
(51) Int. Cl.: H04W 12/50, H04L 9/08, H04L 9/32, H04W 12/06

(54) **INFORMATION PROCESSING METHOD AND APPARATUS, AND DEVICE**
INFORMATIONSVERARBEITUNGSVERFAHREN UND -VORRICHTUNG SOWIE VORRICHTUNG
PROCÉDÉ ET APPAREIL DE TRAITEMENT D'INFORMATIONS, ET DISPOSITIF

(43) Date of publication of application: 15.05.2024
(73) Proprietor: Huawei Technologies Co., Ltd., Shenzhen, Guangdong 518129 (CN)
(72) Inventor: WANG, Yong, Shenzhen, Guangdong 518129 (CN); CHEN, Jing, Shenzhen, Guangdong 518129 (CN); LIU, Huazhang, Shenzhen, Guangdong 518129 (CN)
(74) Representative: Maiwald GmbH
(86) International application number: PCT/CN2021/110360
(87) International publication number: WO 2023/010285

(56) References cited:
- EP-A1- 3 683 703
- EP-A1- 4 184 857
- CN-A- 103 716 334
- CN-A- 104 158 807
- CN-A- 112 596 802
- CN-A- 112 640 506
- CN-A- 112 966 242
- US-A1- 2012 039 474
- US-A1- 2019 052 635
- US-A1- 2020 235 931
- SIG PROPRIETARY BLUETOOTH: "Bluetooth SIG Proprietary Bluetooth Core Specification v5.0", 6 December 2016 (2016-12-06), pages 1 - 2822, XP055567380, Retrieved from the Internet <URL:https://www.bluetooth.org/en-us/specification/adopted-specifications> [retrieved on 20190311]

## Description

### TECHNICAL FIELD

This application relates to the communication field, and in particular, to an information processing method, an apparatus, and a device.

### BACKGROUND

A wireless communication technology relates to information transmission between nodes by using a radio wave. If a transmission distance is limited to a relatively short range (for example, dozens of meters), this may be referred to as short range wireless communication.

Information security is very important for the wireless communication technology, and especially requires authentication of two communication parties, for example, identity authentication. Passwords may be used in common identity authentication. However, in the conventional technology, no password authentication scheme is provided. Consequently, communication security cannot be effectively ensured. Therefore, a password authentication mechanism is urgently needed to improve authentication efficiency and ensure communication performance.
US 2020/235931 A1 discloses a work authorization system comprising a credential provider which is installed on a data processing unit of an automated analyzer instrument comprising a device for entering data, a server comprising an interface for receiving data from the credential provider and information for authentication of a user, a database containing all relevant data necessary for authentication of the user and a device for sending messages.
CN 112640506 A discloses an association method and device applied to nodes supporting Bluetooth communication. The method comprises the following steps: receiving a pairing request message from a first node, wherein the pairing request message comprises information used for indicating whether the first node has a pre-shared key (PSK) pairing capability or not; in response to the fact that the pairing request message contains information used for indicating that the first node has the PSK pairing capability, sending a pairing response message to the first node, wherein the pairing response message is used for indicating that the shared first PSK is used for pairing; and authenticating the first node according to the first PSK.
US 2019/052635 A1 discloses a method for establishing inter-device communication including receiving, using a first device, an encrypted session key sent by a second device, decrypting, based on a private key of the first device, the encrypted session key in a trusted environment to obtain a decrypted session key, and conducting, based on the decrypted session key, data communications with the second device.
Sig Proprietary Bluetooth discloses "Bluetooth SIG Proprietary Bluetooth Core Specification v5.0", 6 December 2016, on pages 1-2822. The document can be retrieved from the Internet https://www.bluetooth.org/en-us/specification/adopted-specifications.

### SUMMARY

To resolve the foregoing problem, this application provides an information processing method, an apparatus, and a device, to support password authentication, thereby improving authentication efficiency. The invention is set out in the appended independent claims, wherein further embodiments are set out in the appended dependent claims.

According to a first aspect, an information processing method is provided. The method includes:
obtaining a first password and a first random number;
generating a first acknowledgment code of the first node based on the first password and the first random number; and
sending the first acknowledgment code and the first random number to a second node.

In the foregoing solution, the first acknowledgment code of the first node is generated based on the first password and the first random number, and then the first acknowledgment code la and the first random number are sent to the second node for authentication, thereby implementing password authentication in communication.

In some possible designs, the method further includes: receiving a second acknowledgment code and a second random number from the second node; generating a third acknowledgment code corresponding to the second node based on the second random number; and if the second acknowledgment code is the same as the third acknowledgment code, determining that the second acknowledgment code is correct.

In the foregoing solution, a calculation workload in an authentication process is low, thereby effectively improving authentication efficiency.

In some possible designs, the generating a first acknowledgment code of the first node based on the first password and the first random number includes: generating the first acknowledgment code based on the first password and the first random number according to a cryptographic algorithm.

In some possible designs, the generating a first acknowledgment code of the first node based on the first password and the first random number includes: generating a first obfuscation code based on the first password; and generating the first acknowledgment code of the first node based on the first random number and the first obfuscation code.

In the foregoing solution, the first acknowledgment code is generated through two calculations. In the first calculation, a first obfuscation code is first generated based on the first password; and then in the second calculation, the first acknowledgment code is generated based on the first obfuscation code and the first random number. This increases difficulty in cracking the first acknowledgment code.

In some possible designs, the generating a first acknowledgment code of the first node based on the first password and the first random number includes: generating the first acknowledgment code based on the first random number, the first password, a public key of the first node, and a public key of the second node.

In the foregoing solution, the first acknowledgment code is generated based on the public key from the first node and the public key from the second node, so that both the first node and the second node can trust the first acknowledgment code.

In some possible designs, if the second acknowledgment code is correct, the method further includes: generating a first verification code based on a first key; and if the first verification code is the same as the second verification code from the second node, determining that the second verification code is correct.

In the foregoing solution, the second acknowledgment code and the second verification code are separately verified, and the first node and the second node can be paired only after the two verifications succeed, thereby improving authentication accuracy.

In some possible designs, the generating a first verification code based on a first key includes: generating a first key verification code based on the first key; and generating the first verification code based on the first key verification code.

In the foregoing solution, the first verification code is generated through two calculations. In the first calculation, the first key verification code is generated based on the first key; and then in the second calculation, the first verification code is generated based on the first key verification code. This increases difficulty in cracking the first verification code.

In some possible designs, the generating a first verification code based on a first key includes: generating the first verification code according to the cryptographic algorithm and based on one or more of the first key, at least two random numbers, an address of the first node, an address of the second node, an input/output capability of the first node, an input/output capability of the second node, a first authentication scheme, or a cryptographic algorithm type.

In the foregoing solution, information from a plurality of perspectives may be used to generate the first verification code, including information about the first node (the address of the first node and the input/output capability of the first node), information about the second node (the address of the second node and the input/output capability of the second node), and information (the first authentication scheme or the cryptographic algorithm type) negotiated between the first node and the second node, thereby increasing difficulty in cracking the first verification code.

In some possible designs, the method further includes: sending first information to the second node, where the first information indicates the cryptographic algorithm.

In some possible designs, the cryptographic algorithm belongs to a cryptographic algorithm set, and the method further includes: sending second information to the second node, where the second information indicates the cryptographic algorithm set; and receiving third information from the second node, where the third information indicates the cryptographic algorithm set.

In the foregoing solution, the first node and the second node may negotiate, through interaction, a cryptographic algorithm set that can be used, to ensure that the first node and the second node may have more cryptographic algorithms for selection, to adapt to different application scenarios.

In some possible designs, the method further includes: sending fourth information to the second node, where the fourth information indicates that the first authentication scheme is password authentication.

According to a second aspect, an information processing apparatus is provided. The apparatus includes an obtaining module, a processing module, and a transceiver module, where
the obtaining module is configured to obtain a first password and a first random number;
the processing module is configured to generate a first acknowledgment code of the first node based on the first password and the first random number; and
the transceiver module is configured to send the first acknowledgment code and the first random number to a second node.

In some possible designs, the transceiver module is configured to receive a second acknowledgment code and a second random number from the second node; the processing module is further configured to generate a third acknowledgment code corresponding to the second node based on the second random number; and the processing module is further configured to: if the second acknowledgment code is the same as the third acknowledgment code, determine that the second acknowledgment code is correct.

In some possible designs, the processing module is further configured to generate the first acknowledgment code based on the first password and the first random number according to a cryptographic algorithm.

In some possible designs, the processing module is further configured to: generate a first obfuscation code based on the first password; and generate the first acknowledgment code of the first node based on the first random number and the first obfuscation code.

In some possible designs, the processing module is further configured to generate the first acknowledgment code based on the first random number, the first password, a public key of the first node, and a public key of the second node.

In some possible designs, the processing module is further configured to: if the second acknowledgment code is correct, generate a first verification code based on a first key; and if the first verification code is the same as the second verification code from the second node, determine that the second verification code is correct.

In some possible designs, the processing module is further configured to: generate a first key verification code based on the first key; and generate the first verification code based on the first key verification code.

In some possible designs, the processing module is further configured to generate the first verification code according to the cryptographic algorithm and based on one or more of the first key, at least two random numbers, an address of the first node, an address of the second node, an input/output capability of the first node, an input/output capability of the second node, a first authentication scheme, or a cryptographic algorithm type.

In some possible designs, the transceiver module is further configured to send first information to the second node, where the first information indicates the cryptographic algorithm.

In some possible designs, the cryptographic algorithm belongs to a cryptographic algorithm set, and the transceiver module is further configured to send second information to the second node, where the second information indicates the cryptographic algorithm set; and receive third information from the second node, where the third information indicates the cryptographic algorithm set.

In some possible designs, the transceiver module is further configured to send fourth information to the second node, where the fourth information indicates that the first authentication scheme is password authentication.

According to a third aspect, a verification method is provided. The method includes:
generating a first verification code based on a first key; and
if the first verification code is the same as the second verification code from a second node, determining that the second verification code is correct.

In some possible designs, the generating a first verification code based on a first key includes: generating a first key verification code based on the first key; and generating the first verification code based on the first key verification code.

In some possible designs, the generating a first verification code based on a first key includes: generating the first verification code according to the cryptographic algorithm and based on one or more of the first key, at least two random numbers, an address of the first node, an address of the second node, an input/output capability of the first node, an input/output capability of the second node, a first authentication scheme, or a cryptographic algorithm type.

In some possible designs, the method further includes: obtaining a first password and a first random number; generating a first acknowledgment code of the first node based on the first password and the first random number; and sending the first acknowledgment code and the first random number to the second node.

In some possible designs, the generating a first acknowledgment code of the first node based on the first password and the first random number includes: generating a first obfuscation code based on the first password; and generating the first acknowledgment code of the first node based on the first random number and the first obfuscation code.

In some possible designs, the method further includes: receiving a second acknowledgment code and a second random number from the second node; generating a third acknowledgment code corresponding to the second node based on the second random number; and if the second acknowledgment code is the same as the third acknowledgment code, determining that the second acknowledgment code is correct.

In some possible designs, the generating a first acknowledgment code of the first node based on the first password and the first random number includes: generating the first acknowledgment code based on the first password and the first random number according to a cryptographic algorithm.

In some possible designs, the generating a first acknowledgment code of the first node based on the first password and the first random number includes: generating the first acknowledgment code based on the first random number, the first password, a public key of the first node, and a public key of the second node.

In some possible designs, the method further includes: sending first information to the second node, where the first information indicates the cryptographic algorithm.

In some possible designs, the cryptographic algorithm belongs to a cryptographic algorithm set, and the method further includes: sending second information to the second node, where the second information indicates the cryptographic algorithm set; and receiving third information from the second node, where the third information indicates the cryptographic algorithm set.

In some possible designs, the method further includes: sending fourth information to the second node, where the fourth information indicates that the first authentication scheme is password authentication.

According to a fourth aspect, a verification apparatus is provided. The apparatus includes a processing module, where
the processing module is configured to: generate a first verification code based on a first key; and if the first verification code is the same as a second verification code from a second node, determine that the second verification code is correct.

In some possible designs, the processing module is further configured to: generate a first key verification code based on the first key; and generate the first verification code based on the first key verification code.

In some possible designs, the processing module is further configured to generate the first verification code according to the cryptographic algorithm and based on one or more of the first key, at least two random numbers, an address of the first node, an address of the second node, an input/output capability of the first node, an input/output capability of the second node, a first authentication scheme, or a cryptographic algorithm type.

In some possible designs, the apparatus further includes an obtaining module and a sending module, where the obtaining module is configured to obtain a first password and a first random number; the processing module is further configured to generate a first acknowledgment code of the first node based on the first password and the first random number; and the sending module is configured to send the first acknowledgment code and the first random number to the second node.

In some possible designs, the processing module is further configured to: generate a first obfuscation code based on the first password; and generate the first acknowledgment code of the first node based on the first random number and the first obfuscation code.

In some possible designs, the transceiver module is further configured to receive a second acknowledgment code and a second random number from the second node; the processing module is further configured to generate a third acknowledgment code corresponding to the second node based on the second random number; and the processing module is further configured to: if the second acknowledgment code is the same as the third acknowledgment code, determine that the second acknowledgment code is correct.

In some possible designs, the processing module is further configured to generate the first acknowledgment code based on the first password and the first random number according to a cryptographic algorithm.

In some possible designs, the processing module is further configured to generate the first acknowledgment code based on the first random number, the first password, a public key of the first node, and a public key of the second node.

In some possible designs, the transceiver module is further configured to send first information to the second node, where the first information indicates the cryptographic algorithm.

In some possible designs, the cryptographic algorithm belongs to a cryptographic algorithm set, and the transceiver module is further configured to send second information to the second node, where the second information indicates the cryptographic algorithm set; and the transceiver module is further configured to receive third information from the second node, where the third information indicates the cryptographic algorithm set.

In some possible designs, the transceiver module is further configured to send fourth information to the second node, where the fourth information indicates that the first authentication scheme is password authentication.

According to a fifth aspect, a chip is provided. The chip includes at least one processor and an interface circuit, where the at least one processor obtains a program or instructions by using the interface circuit, and the at least one processor executes the program or the instructions to implement the method according to any one of the first aspect, or the method according to any one of the third aspect.

According to a sixth aspect, a terminal device is provided. The terminal device includes a processor and a memory, where the processor and the memory may communicate with each other, the memory stores instructions, and the processor executes the instructions to implement the method according to any one of the first aspect, or the method according to any one of the third aspect.

According to a seventh aspect, an embodiment of this application provides a computer software product. The computer program software product includes program instructions, and when the computer software product is executed by an apparatus, the apparatus performs the method according to any one of the possible embodiments of the first aspect, or the method according to any one of the possible embodiments of the third aspect. The computer software product may be a software installation package. When the method according to any one of the first aspect, or the method according to any one of the third aspect needs to be used, the computer software product may be downloaded, and the computer software product may be executed on the apparatus, to implement the method according to any one of the first aspect or the possible embodiments of the first aspect, or the method according to any one of the third aspect or the possible embodiments of the third aspect.

According to an eighth aspect, an embodiment of this application provides a computer-readable storage medium. The computer-readable storage medium stores program code to be executed by an apparatus, and the program code includes instructions used to perform the method according to any one of the first aspect, or the method according to any one of the third aspect.

According to a ninth aspect, an embodiment of this application provides an apparatus. The apparatus includes at least one processor and a communication interface, where the communication interface is configured to provide information input and/or information output for the at least one processor. The apparatus may be a chip or an integrated circuit; or the apparatus may be the apparatus according to the second aspect, and the apparatus is configured to implement the method according to any one of the first aspect or the possible embodiments of the first aspect; or the apparatus may be the apparatus according to the fourth aspect, and the apparatus is configured to implement the method according to any one of the first aspect or the possible embodiments of the first aspect, or the method according to any one of the third aspect or the possible embodiments of the third aspect.

### BRIEF DESCRIPTION OF DRAWINGS

To describe the technical solutions in embodiments of this application or the background more clearly, the following describes the accompanying drawings used in embodiments of this application or the background.
FIG. 1 is a schematic diagram of an application scenario of short range communication according to this application;
FIG. 2 is a schematic diagram of a protocol-based interaction procedure for performing short range communication between nodes according to this application;
FIG. 3A and FIG. 3B are schematic flowcharts of two specific protocol-based interaction procedures for performing short range communication between nodes according to this application;
FIG. 4A to FIG. 4E are schematic diagrams of information structures used in two specific protocol-based interaction procedures for performing short range communication between nodes according to this application;
FIG. 5 is a schematic flowchart of a negotiation procedure between a first node and a second node according to this application;
FIG. 6 is a schematic flowchart of a password verification process between a first node and a second node according to this application;
FIG. 7 is a schematic flowchart of a verification code verification process between a first node and a second node according to this application;
FIG. 8 is a schematic diagram of a process of generating a first key verification code according to this application;
FIG. 9 is a schematic diagram of a process of generating a first verification code according to this application;
FIG. 10 is a schematic diagram of a structure of an apparatus according to an embodiment of this application;
FIG. 11 is a schematic diagram of a structure of an apparatus according to an embodiment of this application; and
FIG. 12 is a schematic diagram of a structure of an apparatus according to an embodiment of this application.

### DESCRIPTION OF EMBODIMENTS

For ease of understanding, an application scenario of short range communication in this application is first described in detail.

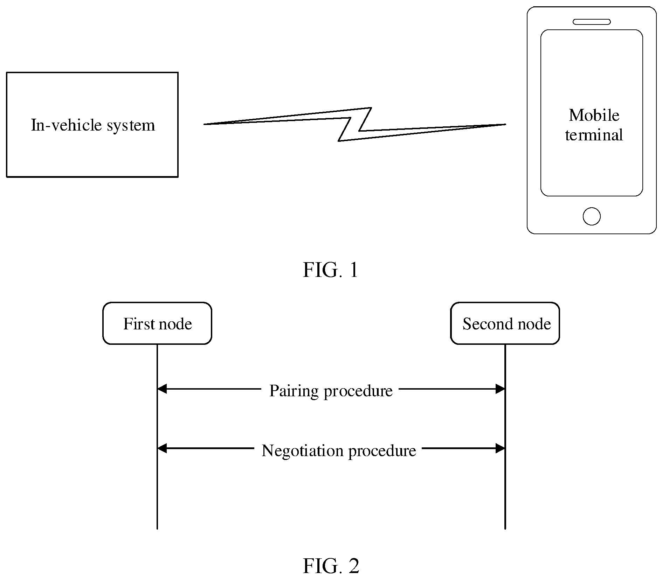

As shown in FIG. 1, after short range communication is established between nodes, data transmission may be freely performed between the nodes. A technology used in the short range communication may be a Bluetooth technology, a ZigBee technology, a wireless local area network (Wireless Local Area Network, WLAN) technology, an ultra-wideband (ultra-wideband, UWB) technology, or the like. The node is an electronic device that is capable of sending and receiving data. For example, the node may be a vehicle cockpit domain (cockpit domain) device, or a module in a vehicle cockpit domain device, for example, one or more of modules such as a cockpit domain controller (cockpit domain controller, CDC), a camera, a display, a microphone, a speaker, an electronic key, and a keyless entry or start system controller. The node may be a data transfer device, for example, a router, a repeater, a bridge, or a switch; or may be a terminal device, for example, any type of user equipment (user equipment, UE), a mobile phone (mobile phone), a tablet computer (pad), a desktop computer, earphones, or a speaker; or may include a machine intelligence device like a self-driving (self-driving) device, a transportation safety (transportation safety) device, a virtual reality (virtual reality, VR) terminal device, an augmented reality (augmented reality, AR) terminal device, a machine type communication (machine type communication, MTC) device, an industrial control (industrial control) device, a telemedicine (remote medical) device, a smart grid (smart grid) device, or a smart city (smart city) device, or may include a wearable device (for example, a smart watch, a smart band, or a pedometer), or the like. In a specific embodiment, the node may include an in-vehicle system and a mobile terminal, that is, short range communication may be performed between the in-vehicle system and the mobile terminal. In some scenarios, a device with a similar data sending/receiving capability may alternatively not be referred to as a node. However, for ease of description, electronic devices having a data sending/receiving capability are collectively referred to as nodes in embodiments of this application. It should be understood that the examples in this specification are described by using an application scenario of short range communication as an example. However, in actual application, another communication application scenario is also applicable, and this is not specifically limited herein.

Before short range communication is performed between nodes, a pairing procedure and an authentication process need to be performed between the nodes. FIG. 2 is used as an example. First, a pairing procedure is performed between the first node and the second node; and then a negotiation procedure is performed between the first node and the second node. The following uses a scenario in which a password is verified as an example for detailed description. The scenario in which a password is verified refers to a scenario in which a user presets a password, and then enters a password in the first node and the second node in a pairing procedure after the first login, and performs identity authentication based on the password, so that identity authentication does not need to be performed repeatedly in a subsequent login.

In a scenario in which a password is verified, a pairing procedure between the first node and the second node may be performed in the following two manners.

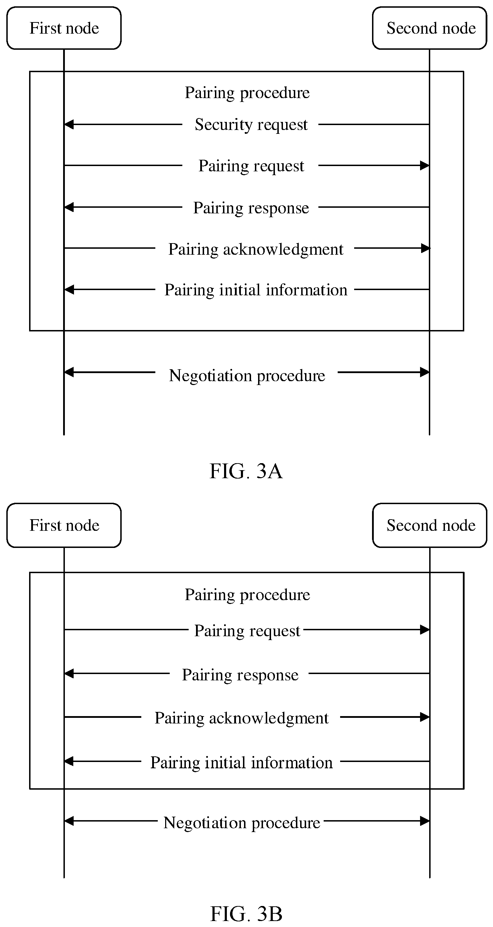

In the first manner, the pairing procedure is triggered by the second node. As shown in FIG. 3A, the second node sends a security request to the first node to trigger the pairing procedure. The first node sends a pairing request to the second node. The second node sends a pairing response to the first node. The first node sends a pairing acknowledgment to the second node. The second node sends initial pairing information to the first node.

In the second manner, the pairing procedure is triggered by the first node. As shown in FIG. 3B, a procedure of pairing between the first node and the second node may include: the first node sends a pairing request to the second node, to trigger the pairing procedure. The second node sends a pairing response to the first node. The first node sends a pairing acknowledgment to the second node. The second node sends initial pairing information to the first node.

It should be understood that the foregoing two implementations are merely specific examples. This is not specifically limited herein.

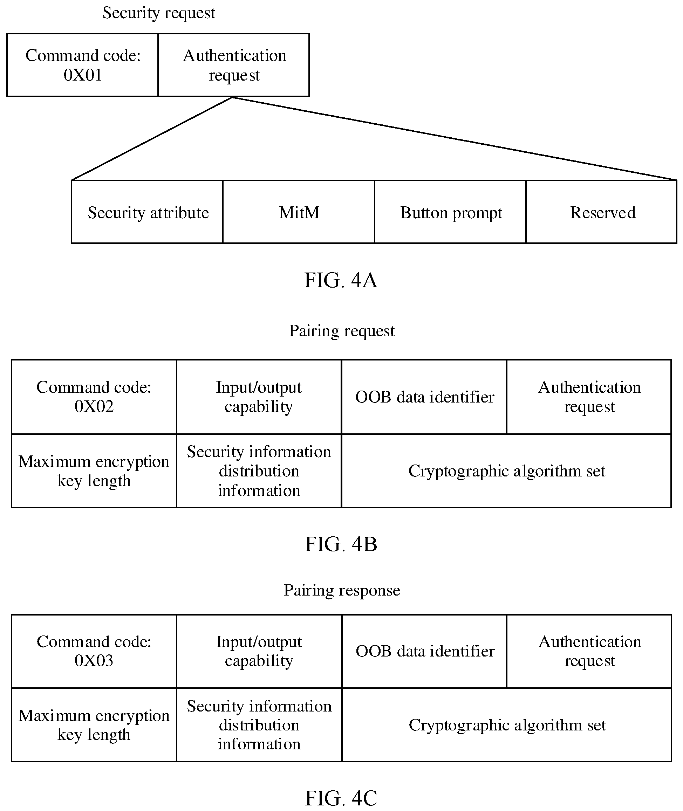

In a specific implementation, as shown in FIG. 4A, the security request includes a command code (for example, 0X01), an authentication request, and the like. The authentication request includes: a security attribute, an anti-man-in-the-middle attack (man-in-the-middle attack, MitM) indication bit, a key prompt, a reserved bit, and the like.

In an implementation, the security attribute may be shown in Table 1.

**Table 1 Security attribute**

| Value | Description |
|---|---|
| 00 | Pairing in a non-binding mode |
| 01 | Pairing in a binding mode |
| Other | Reserved field |

It may be understood that Table 1 is merely used as an example to reflect a correspondence between a value of a security attribute and a description of the security attribute. In actual application, text content and a storage manner of the correspondence may alternatively be in another form. This is not specifically limited herein. All the following tables are represented as examples, and a correspondence may be represented or stored in any possible manner. Details are not described in the following.

In an implementation, the MitM may be shown in Table 2.

**Table 2 MitM**

| Value | Description |
|---|---|
| 0 | Pairing in the man-in-the-middle attack mode does not need to be supported. |
| 1 | Pairing in the man-in-the-middle attack mode needs to be supported. |

In an implementation, the key prompt may be shown in Table 3.

**Table 3 Key prompt**

| Value | Description |
|---|---|
| 0 | Pairing without a key prompt |
| 1 | Pairing with a key prompt |

In a specific implementation, as shown in FIG. 4B, the pairing request may include: a command code (for example, 0X02), an input/output capability, an out-of-band data (out of band, OOB) data identifier, an authentication request, a maximum encryption key length, security information distribution information, a cryptographic algorithm set, and the like.

In an implementation, the input/output capability may be shown in Table 4.

**Table 4 Input/output capability**

| Value | Description |
|---|---|
| 0x00 | Only display |
| 0x01 | Display; and input Yes and No. |
| 0x02 | Only keyboard |
| 0x03 | No input or output |
| 0x04 | Keyboard and display |
| 0x05-0xFF | Reserved for other purposes |

In an implementation, the OOB data identifier may be shown in Table 5.

**Table 5 OOB data identifier**

| Value | Description |
|---|---|
| 0x00 | There is no OOB data. |
| 0x01 | There is OOB data. |

In an implementation, for the authentication request, refer to the foregoing authentication request. Details are not described herein again.

In an implementation, the maximum encryption key length is used to indicate a maximum key length that can be supported by the node. For example, the minimum length of a key is limited to 7 bytes.

In an implementation, the security information distribution information may be shown in Table 6.

**Table 6 Security information distribution information**

| Value | Description |
|---|---|
| 0 | After the pairing, IRK information is distributed to a peer end. |
| 1 | After the pairing, address information, namely, a public address or a static random address, is distributed to the peer end. |

In an implementation, the cryptographic algorithm set may include an encryption algorithm, an integrity protection algorithm, a key derivation function, a key agreement algorithm, and the like. The cryptographic algorithm set may be shown in Table 7.

**Table 7 Cryptographic algorithm set**

| | | | |
|---|---|---|---|
| Encryption algorithm | Integrity protection algorithm | Key derivation function | Key agreement algorithm |

In an implementation, as shown in Table 8, the cryptographic algorithm may include:

**Table 8 Cryptographic algorithms**

| Algorithm type | Algorithm name | Algorithm identifier (binary) | Algorithm description |
|---|---|---|---|
| Encryption algorithm | GCA1 | 0001 | ZUC; key length: 128 bits |
| | GCA2 | 0010 | AES-CTR; key length: 128 bits |
| | GCA3 | 0011 | AES-CTR; key length: 256 bits |
| Integrity protection algorithm | GIA1 | 0001 | ZUC; key length: 128 bits; |
| | GIA2 | 0010 | AES-CMAC; key length: 128 bits; |
| | GIA3 | 0011 | AES-CMAC; key length: 256 bits; |
| Key derivation function | GHA1 | 0001 | HMAC-SM3 |
| | GHA2 | 0010 | HMAC-SHA256 |
| Key agreement algorithm | GKE1 | 0001 | SM2 |
| | GKE2 | 0010 | ECDH; used curve: P-256 |

In an implementation, the cryptographic algorithm set (which may also become a security capability) is described in Table 9.

**Table 9 Cryptographic algorithm set**

| | 0 | 1 | 2 | 3 | 4 | 5 | 6 | 7 |
|---|---|---|---|---|---|---|---|---|
| Byte 1 | GCA1 | GCA2 | GCA3 | Reserved | Reserved | Reserved | Reserved | Reserved |
| Byte 2 | GIA1 | GIA2 | GIA3 | Reserved | Reserved | Reserved | Reserved | Reserved |
| Byte 3 | GHA1 | GHA2 | Reserved | Reserved | Reserved | Reserved | Reserved | Reserved |
| Byte 4 | GKE1 | GKE2 | Reserved | Reserved | Reserved | Reserved | Reserved | Reserved |

It may be understood that the cryptographic algorithm set may further include other types of cryptographic algorithms, and content of an encryption algorithm, content of an integrity protection algorithm, content of a key derivation function, and content of a key agreement algorithm are not merely the content described in the embodiment shown in Table 8. This is not specifically limited herein.

In a specific implementation, as shown in FIG. 4C, the pairing response may include a command code (for example, 0X03), an input/output capability, an OOB data identifier, an authentication request, a maximum encryption key length, security information distribution information, a cryptographic algorithm type, and the like. Actually, for explanations of the input/output capability, the OOB data identifier, the authentication request, the maximum encryption key length, the security information distribution information, and the cryptographic algorithm set, refer to the foregoing related content. Details are not described herein again.

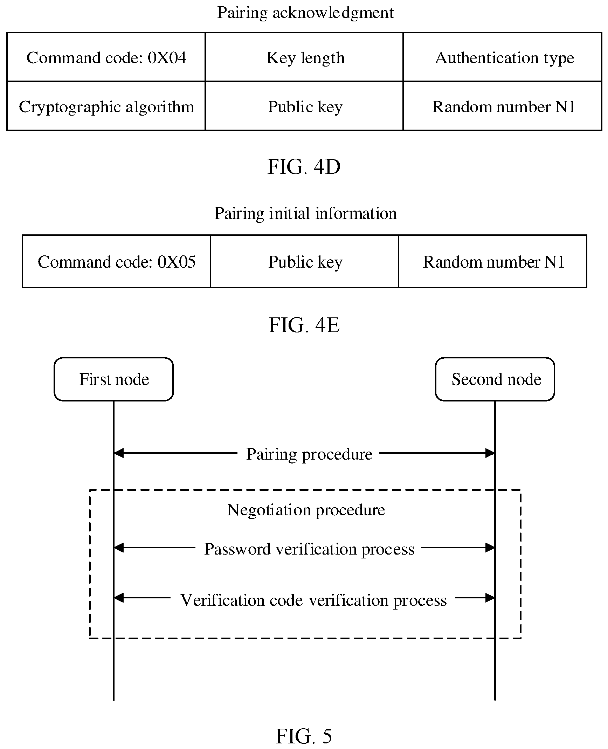

In a specific implementation, the pairing acknowledgment information may include an authentication type and a cryptographic algorithm type for use by the second node to perform subsequent pairing and encryption. The authentication type may be determined according to an optimal pairing method, and the optimal pairing method may be determined by the first node according to the input/output capability of the second node. The cryptographic algorithm type may be determined based on the cryptographic algorithm set supported by the second node. Optionally, the pairing acknowledgment information may further include a random number N1 used for subsequently generating a link cipher key and a public key used for key agreement. As shown in FIG. 4D, the pairing acknowledgment may include a command code (for example, 0X04), a key length, an authentication type, a cryptographic algorithm type, a public key of the first node, and a random number N1.

In an implementation, the key length is a key length finally determined by the first node.

In an implementation, the authentication types may be shown in Table 10.

**Table 10 Authentication types**

| Value | Description |
|---|---|
| 0x00 | Password authentication |
| 0x01 | Numeric comparison authentication |
| 0x02 | Pass code input authentication |
| 0x03 | OOB authentication (out-of-band mode) |
| 0x04 | Authentication without input |

In an implementation, the cryptographic algorithm may be one or more algorithms in a cryptographic algorithm set.

In an implementation, the random number N1 is a random number that needs to be used to generate a link cipher key.

In a specific implementation, as shown in FIG. 4E, the pairing initial information may include a command code (for example, 0X05), a public key of the second node, and a random number N2.

In an implementation, the random number N2 is a random number that needs to be used to generate a link cipher key.

It may be understood that in the foregoing pairing procedure, a cryptographic algorithm type is carried, and a password authentication scheme is added to the authentication type, so that a negotiation procedure in a password verification scenario can be supported.

If the first node sends fourth information to the second node, where the fourth information indicates that an authentication scheme is password authentication, and the password verification scenario is entered. The fourth information may be the pairing acknowledgment shown in FIG. 4D, or like information. In the password verification scenario, as shown in FIG. 5, the process of negotiation between the first node and the second node may include the following steps: a password authentication process is performed between the first node and the second node; and a verification code verification process is performed between the first node and the second node.

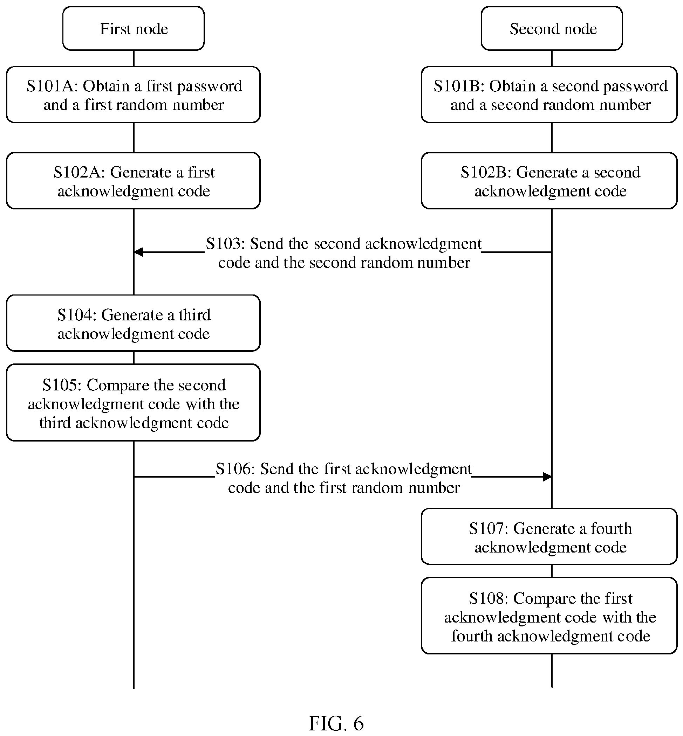

FIG. 6 is a schematic flowchart of a password verification process between a first node and a second node according to this application. The password verification process in this embodiment includes the following steps:
S101A: The first node obtains a first password and a first random number.

In a specific implementation, the first password may be a combination of digits, letters, and symbols that is preset by a user. The first password may be entered by the user on a user interface of the first node, or may be obtained in another manner.

In a specific implementation, the first random number is a number randomly generated by the first node.

S102A: The first node generates a first acknowledgment code of the first node based on the first password and the first random number.

In a specific implementation, the generating a first acknowledgment code of the first node based on the first password and the first random number may be: generating the first acknowledgment code based on the first random number, the first password, a public key of the first node, and a public key of the second node. The public key of the first node may be a public key included in the pairing acknowledgment that is sent by the first node to the second node and that is shown in FIG. 4D. The public key of the second node may be a public key in pairing initial information that is sent by the second node to the first node and that is shown in FIG. 4E. It may be understood that in the following, the meaning of "based on" is "at least based on", instead of "merely based on". For example, the generating a first acknowledgment code of the first node based on the first password and the first random number may be understood as: generating the first acknowledgment code of the first node based on more parameters, for example, the public key of the first node and the public key of the second node, in addition to the first password and the first random number.

In a specific implementation, the generating a first acknowledgment code of the first node based on the first password and the first random number may be: generating a first obfuscation code based on the first password; and generating the first acknowledgment code of the first node based on the first random number and the first obfuscation code.

In a specific implementation, the generating a first acknowledgment code of the first node based on the first password and the first random number may be: generating the first acknowledgment code based on the first password and the first random number according to a cryptographic algorithm. The cryptographic algorithm may be one or more cryptographic algorithms in a cryptographic algorithm set. For example, the cryptographic algorithm set may include the cryptographic algorithms shown in Table 8 above. The cryptographic algorithm may be an AES-CMAC algorithm, an HMAC-SM3 algorithm, or the like. The cryptographic algorithm may be specified and notified by the first node to the second node. For example, the first node may send, to the second node, first information indicating the cryptographic algorithm, so that both the first node and the second node use the cryptographic algorithm. Herein, the first information may be a pairing acknowledgment in FIG. 4D or like information, sent by the first node to the second node. The cryptographic algorithm set may be negotiated between the first node and the second node. For example, the first node sends, to the second node, second information indicating the cryptographic algorithm set, and the second node sends, to the first node, third information indicating the cryptographic algorithm set, to implement negotiation on the cryptographic algorithm set. Herein, the second information may be a pairing request in FIG. 4B or like information, sent by the first node to the second node. The third information may be a pairing response in FIG. 4C or like information, sent by the second node to the first node.

In a more specific implementation, the generating a first acknowledgment code of the first node based on the first password and the first random number may be: generating the first obfuscation code based on the first password according to the AES-CMAC algorithm and/or the HMAC-SM3 algorithm. For example, a value of the first obfuscation code meets any one of the following:
AES-CMAC (DL, first password);
HMAC-SM3 (DL, first password);
HMAC-SM3 (DL, first password) + AES-CMAC (DL, first password);
AEC-CMAC is a cryptographic algorithm; HMAC-SM3 is another cryptographic algorithm; and DL may be represented as a part of an exchange key. The exchange key may be a DH key or the like. For example, the exchange key is a DH key, and the exchange key may be generated based on a key agreement algorithm and a public key. The key agreement algorithm is determined by the first node after the key algorithm set is exchanged. The exchange key is a symmetric key. A part of the exchange key may be a high-order part, a medium-order part, or a low-order part of the key. For example, the exchange key is 256 bits, and a part of the exchange key may be high 128 bits, middle 128 bits, low 128 bits, or the like. It should be understood that the foregoing example is described by using an example in which the exchange key is 256 bits. In another embodiment, the exchange key may be 128 bits, 512 bits, 1024 bits, or the like. This is not specifically limited herein.

Then the first acknowledgment code is generated based on the first random number, the public key of the first node, the public key of the second node, and the first obfuscation code according to the AES-CMAC algorithm and/or the HMAC-SM3 algorithm. For example, a value of the first acknowledgment code meets any one of the following:
AES-CMAC (K₁, M₁, len₁);
HMAC-SM3 (K₁, M₁, len₁);
AES-CMAC (K₁, M₁, len₁) + HMAC-SM3 (K₁, M₁, len₁);
K₁ is the first random number, M₁ is the public key of the first node∥the public key of the second node∥the first obfuscation code, and len₁ is a length of M₁. "||" indicates that characters are concatenated.

S101B: The second node obtains a second password and a second random number.

In a specific implementation, the second password may be a combination of digits, letters, and symbols that is preset by the user. The second password may be entered by the user on a user interface of the second node, or may be obtained in another manner.

In a specific implementation, the second random number is a number randomly generated by the second node.

S 102B: The second node generates a second acknowledgment code of the second node based on the second password and the second random number.

In a specific implementation, the generating a second acknowledgment code of the second node based on the second password and the second random number may be: generating the second acknowledgment code based on the second random number, the second password, the public key of the first node, and the public key of the second node.

In a specific implementation, the generating a second acknowledgment code of the second node based on the second password and the second random number may be: generating a second obfuscation code based on the second password; and generating the second acknowledgment code of the second node based on the second random number and the second obfuscation code.

In a specific implementation, the generating a second acknowledgment code of the second node based on the second password and the second random number may be: generating the second acknowledgment code based on the second password and the second random number according to a cryptographic algorithm.

In a more specific implementation, the generating a second acknowledgment code of the second node based on the second password and the second random number may be: generating the second obfuscation code based on the second password according to the AES-CMAC algorithm and/or the HMAC-SM3 algorithm. For example, a value of the second obfuscation code meets any one of the following:
AES-CMAC (DL, second password);
HMAC-SM3 (DL, second password);
AES-CMAC (DL, second password) + HMAC-SM3 (DL, second password);
AEC-CMAC is a cryptographic algorithm; HMAC-SM3 is another cryptographic algorithm; and DL may be represented as a part of an exchange key.

Then the second acknowledgment code is generated based on the second random number, the public key of the first node, the public key of the second node, and the second obfuscation code according to the AES-CMAC algorithm and the HMAC-SM3 algorithm. For example, a value of the second acknowledgment code meets any one of the following:
AES-CMAC (K₂, M₂, len₂);
HMAC-SM3 (K₂, M₂, len₂);
AES-CMAC (K₂, M₂, len₂) + HMAC-SM3 (K₂, M₂, len₂);
05 November 2024 K₂ is the second random number; M₂ is the public key of the first node∥the public key of the second node∥the second obfuscation code; and len₂ is a length of M₂.

S103: The second node sends the second acknowledgment code and the second random number to the first node. Correspondingly, the first node receives the second acknowledgment code and the second random number that are sent by the second node.

S104: The first node generates a third acknowledgment code corresponding to the second node based on the second random number.

In a specific implementation, the generating a third acknowledgment code of the second node based on the second random number may be: generating the third acknowledgment code based on the second random number, the first password, the public key of the first node, and the public key of the second node.

In a specific implementation, the generating a third acknowledgment code of the second node based on the second random number may be: generating a third obfuscation code based on the first password; and generating the third acknowledgment code of the second node based on the second random number and the third obfuscation code.

In a specific implementation, the generating a third acknowledgment code of the second node based on the second random number may be: generating the third acknowledgment code of the second node based on the second random number according to a cryptographic algorithm.

In a more specific implementation, the generating the third acknowledgment code of the second node based on the second random number according to a cryptographic algorithm may be: generating the third obfuscation code based on the first password according to the AES-CMAC algorithm and/or the HMAC-SM3 algorithm. For example, a value of the third obfuscation code meets any one of the following:
AES-CMAC (DL, first password);
HMAC-SM3 (DL, first password);
AES-CMAC (DL, first password) + HMAC-SM3 (DL, first password);
AEC-CMAC is a cryptographic algorithm; HMAC-SM3 is another cryptographic algorithm; and DL is a part of an exchange key.

Then the third acknowledgment code is generated based on the second random number, the public key of the first node, the public key of the second node, and the third obfuscation code according to the AES-CMAC algorithm and/or the HMAC-SM3 algorithm. For example, a value of the third acknowledgment code meets any one of the following:
AES-CMAC (K₂, M₃, len₃);
HMAC-SM3 (K₂, M₃, len₃);
AES-CMAC (K₂, M₃, len₃) + HMAC-SM3 (K₂, M₃, len₃);
K₂ is the second random number; M₃ is the public key of the first node∥the public key of the second node∥the third obfuscation code; and len₃ is a length of M₃.

S105: The first node compares the second acknowledgment code with the third acknowledgment code. When the second acknowledgment code is the same as the third acknowledgment code, it is determined that the second acknowledgment code is correct, pairing between the first node and the second node may be continued, and step S106 is performed; or when the second acknowledgment code is different from the third acknowledgment code, it is determined that the second acknowledgment code is incorrect, and pairing between the first node and the second node is terminated, and the process ends.

S106: The first node sends the first acknowledgment code and the first random number to the second node. Correspondingly, the second node receives the first acknowledgment code and the first random number that are sent by the first node.

S107: The second node generates a fourth acknowledgment code corresponding to the first node based on the first random number.

In a specific implementation, the generating a fourth acknowledgment code corresponding to the first node based on the first random number may be: generating the fourth acknowledgment code based on the first random number, the second password, the public key of the first node, and the public key of the second node.

In a specific implementation, the generating a fourth acknowledgment code corresponding to the first node based on the first random number may be: generating a fourth obfuscation code based on the second password; and generating the fourth acknowledgment code of the first node based on the first random number and the fourth obfuscation code.

In a specific implementation, the generating a fourth acknowledgment code corresponding to the first node based on the first random number may be: generating the fourth acknowledgment code based on the second password and the first random number according to a cryptographic algorithm.

In a more specific implementation, the generating the fourth acknowledgment code corresponding to the first node based on the second password and the first random number according to a cryptographic algorithm may be: generating the fourth obfuscation code based on the second password according to the AES-CMAC algorithm and/or the HMAC-SM3 algorithm. For example, a value of the fourth obfuscation code meets any one of the following:
AES-CMAC (DL, second password);
HMAC-SM3 (DL, second password);
AES-CMAC (DL, second password) + HMAC-SM3 (DL, second password);
AEC-CMAC is a cryptographic algorithm; HMAC-SM3 is another cryptographic algorithm; and DL is a part of an exchange key.

Then the fourth acknowledgment code is generated based on the first random number, the public key of the first node, the public key of the second node, and the fourth obfuscation code according to the AES-CMAC algorithm and/or the HMAC-SM3 algorithm. For example, a value of the fourth acknowledgment code meets any one of the following:
AES-CMAC (K₁, M₄, len₄);
HMAC-SM3 (K₁, M₄, len₄);
AES-CMAC (K₁, M₄, len₄) + HMAC-SM3 (K₁, M₄, len₄);
K₁ is the first random number, M₄ is the public key of the first node∥the public key of the second node∥the fourth obfuscation code, and len4 is a length of M₄. "||" indicates that characters are concatenated.

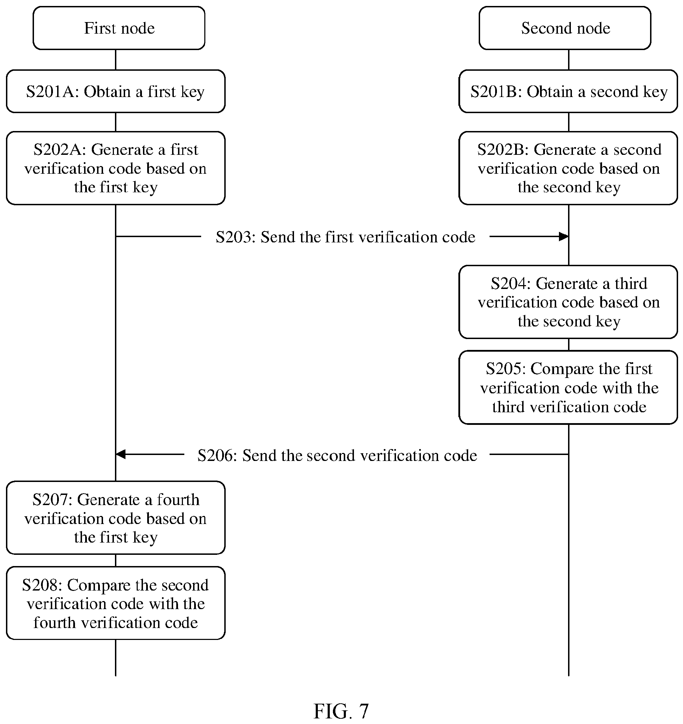

S108: The second node compares the first acknowledgment code with the fourth acknowledgment code. When the first acknowledgment code is the same as the fourth acknowledgment code, it is determined that the first acknowledgment code is correct, and pairing between the first node and the second node may be continued. For example, the verification code verification process shown in FIG. 7 may be continued, or it is determined that the first node and the second node are successfully paired, and the process ends. When the first acknowledgment code is different from the fourth acknowledgment code, it is determined that the first acknowledgment code is incorrect, pairing between the first node and the second node is terminated, and the process ends.

It may be understood that a name of a process (for example, a password verification process) and a name of information (for example, pairing acknowledgment and pairing initial information) that are used in this embodiment are merely examples, and may be replaced with any possible name in actual application.

In the foregoing example, step S101A and step S102A are performed independently relative to step S101B and step S102B. Therefore, a possible execution sequence includes: step S101A and step S101B are simultaneously performed, step S102A and step S102B are simultaneously performed, step S101A is performed before or after step S101B, step S102A is performed before or after step S102B, or the like. This is not specifically limited herein. Step S103 to step S105 are performed independently relative to step S106 to step S108. Therefore, a possible execution sequence includes: step S103 and step S106 are simultaneously performed, step S104 and step S107 are simultaneously performed, step S105 and step S108 are simultaneously performed, step S103 is performed before or after step S106, step S104 is performed before or after step S107, step S105 is performed before or after step S108, or the like.

FIG. 7 is a schematic flowchart of a verification code verification process between a first node and a second node according to this application. The verification code verification process in this embodiment includes the following steps:
S201A: The first node obtains a first key.

In a specific implementation, the first key may be a first DH key. The first DH key in the first node may be generated based on a key agreement algorithm and a public key of the second node.

S202A: The first node generates a first verification code based on the first key.

In a specific implementation, the generating a first verification code based on the first key includes: generating the first verification code based on the first key according to a cryptographic algorithm.

In a specific implementation, the generating a first verification code based on a first key includes: generating the first verification code based on one or more of the first key, at least two random numbers, an address of the first node, an address of the second node, an input/output capability of the first node, an input/output capability of the second node, a first authentication scheme, or a cryptographic algorithm type. The at least two random numbers may include a third random number and a fourth random number. The third random number may be sent by the first node to the second node. Specifically, the first node may send the pairing acknowledgment (refer to FIG. 4D) including the third random number to the second node. The fourth random number may be sent by the second node to the first node. Specifically, the second node may send the pairing initial information (refer to FIG. 4E) including the fourth random number to the first node. The address of the first node and the address of the second node may be obtained through exchange before the pairing or through exchange in the pairing request and the pairing response.

In a specific implementation, the generating a first verification code based on a first key includes: generating the first verification code based on one or more of the first key, at least two random numbers, a first parameter, a second parameter, an address of the first node, an address of the second node, an input/output capability of the first node, an input/output capability of the second node, a first authentication scheme, or a cryptographic algorithm type. The first parameter may be a second random number or the like; and the second parameter may be an input/output capability of the first node ∥ an input/output capability of the second node ∥ a first authentication scheme ∥ a cryptographic algorithm, or the like. The input/output capability of the first node may be sent by the first node to the second node. For example, the first node may send the pairing request (refer to FIG. 4B) including the input/output capability of the first node to the second node. The input/output capability of the second node may be sent by the second node to the first node. For example, the second node may send the pairing response (refer to FIG. 4C) including the input/output capability of the second node to the first node. It may be understood that the second parameter is obtained by connecting four parameters in series. In actual application, the second parameter may be obtained by connecting more or fewer parameters in series. This is not specifically limited herein.

In a more specific implementation, the generating a first verification code based on a first key includes: generating a first key verification code based on the first key; and generating the first verification code based on the first key verification code.

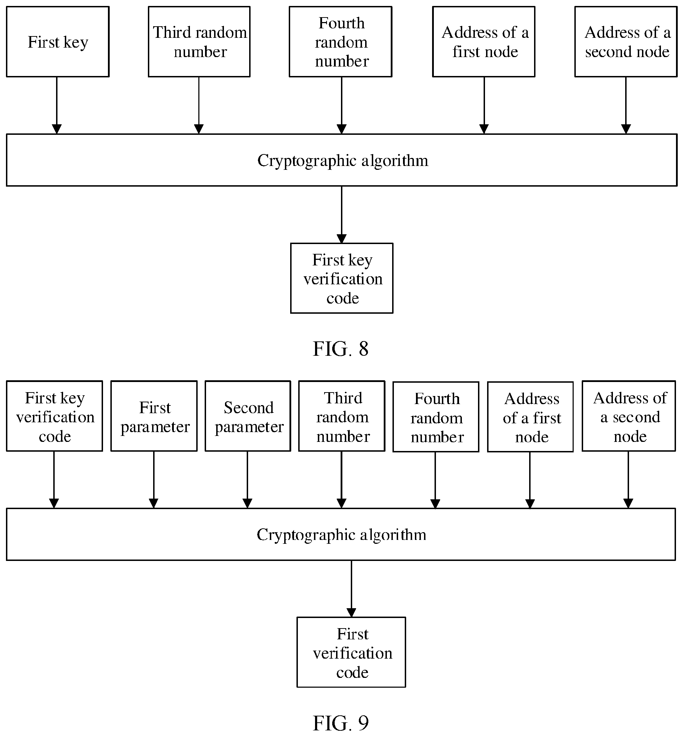

As shown in FIG. 8, the generating a first key verification code based on the first key may include: generating the first key verification code based on the first key, a third random number, a fourth random number, the address of the first node, and the address of the second node. For example, a value of the first key verification code meets any one of the following:
AES-CMAC (DH key1, N1, N2, Address1, Address2);
HMAC-SM3 (DH key1, N1, N2, Address1, Address2);
AES-CMAC (DH key1, N1, N2, Address1, Address2) + HMAC-SM3 (DH key1, N1, N2, Address1, Address2);
AES-CMAC is a cryptographic algorithm; HMAC-SM3 is another cryptographic algorithm; and DH key1 is a first key, for example, a DH key; N1 is the third random number; N2 is the fourth random number; Address1 is the address of the first node; and Address2 is the address of the second node.

As shown in FIG. 9, the generating the first verification code based on the first key verification code may include: generating the first verification code based on the first key verification code, the first parameter, the second parameter, the third random number, the fourth random number, the address of the first node, and the address of the second node. For example, a value of the first verification code meets any one of the following:
AES-CMAC (first key verification code, S1, S2, N1, N2, Address1, Address2);
HMAC-SM3 (first key verification code, S1, S2, N1, N2, Address1, Address2);
AES-CMAC (first key verification code, S1, S2, N1, N2, Address1, Address2) + HMAC-SM3 (first key verification code, S1, S2, N1, N2, Address1, Address2);
AES-CMAC is a cryptographic algorithm; HMAC-SM3 is another cryptographic algorithm; S1 is the first parameter; S2 is the second parameter; N1 is the third random number; N2 is the fourth random number; Address1 is the address of the first node; and Address2 is the address of the second node.

S201B: The second node obtains a second key.

In a specific implementation, the second key may be a second DH key. The second DH key of the second node may be generated according to a key agreement algorithm and a public key of the first node.

S202B: The second node generates a second verification code based on the second key.

In a specific implementation, the generating a second verification code based on the second key includes: generating the second verification code based on the second key according to a cryptographic algorithm.

In a specific implementation, the generating a second verification code based on the second key includes: generating the second verification code based on one or more of the second key, at least two random numbers, an address of the first node, an address of the second node, an input/output capability of the first node, an input/output capability of the second node, a first authentication scheme, or a cryptographic algorithm.

In a specific implementation, the generating a second verification code based on a second key includes: generating the second verification code based on one or more of the second key, at least two random numbers, a third parameter, a fourth parameter, an address of the first node, an address of the second node, an input/output capability of the first node, an input/output capability of the second node, a first authentication scheme, or a cryptographic algorithm type. The third parameter may be a first random number or the like; and the fourth parameter may be an input/output capability of the first node∥an input/output capability of the second node∥a first authentication scheme∥a cryptographic algorithm or the like.

In a more specific implementation, the generating a second verification code based on a second key includes: generating a second key verification code based on the second key; and generating the second verification code based on the second key verification code.

The generating a second key verification code based on the second key may include: generating the second key verification code based on the second key, the third random number, the fourth random number, the address of the first node, and the address of the second node. For example, a value of the second key verification code meets any one of the following:
AES-CMAC (DH key2, N1, N2, Address1, Address2);
HMAC-SM3 (DH key2, N1, N2, Address1, Address2);
AES-CMAC (DH key2, N1, N2, Address1, Address2) + HMAC-SM3 (DH key2, N1, N2, Address1, Address2);
AES-CMAC is a cryptographic algorithm; HMAC-SM3 is another cryptographic algorithm; and DH key2 is the second key, for example, a DH key; N1 is the third random number; N2 is the fourth random number; Address1 is the address of the first node; and Address2 is an address of the second node.

The generating the second verification code based on the second key verification code may include: generating the second verification code based on the second key verification code, the third parameter, the fourth parameter, the third random number, the fourth random number, the address of the first node, and the address of the second node. For example, a value of the second verification code meets any one of the following:
AES-CMAC (second key verification code, S3, S4, N1, N2, Address1, Address2);
HMAC-SM3 (second key verification code, S3, S4, N1, N2, Address1, Address2);
AES-CMAC (second key verification code, S3, S4, N1, N2, Address1, Address2) + HMAC-SM3 (second key verification code, S3, S4, N1, N2, Address1, Address2);
AES-CMAC is a cryptographic algorithm; HMAC-SM3 is another cryptographic algorithm; S3 is the third parameter; S4 is the fourth parameter; N1 is the third random number; N2 is the fourth random number; Address1 is the address of the first node; and Address2 is the address of the second node.

S203: The first node sends the first verification code to the second node. Correspondingly, the second node receives the first verification code sent by the first node.

S204: The second node generates a third verification code based on the second key.

In a specific implementation, the generating a third verification code based on the second key includes: generating the third verification code based on the second key according to a cryptographic algorithm.

In a specific implementation, the generating a third verification code based on the second key includes: generating the third verification code based on one or more of the second key, at least two random numbers, an address of the first node, an address of the second node, an input/output capability of the first node, an input/output capability of the second node, a first authentication scheme, or a cryptographic algorithm type.

In a specific implementation, the generating a third verification code based on the second key includes: generating the third verification code based on one or more of the second key, at least two random numbers, a first parameter, an address of the first node, an address of the second node, an input/output capability of the first node, an input/output capability of the second node, a first authentication scheme, or a cryptographic algorithm type. For the first parameter, the address of the first node, the address of the second node, the input/output capability of the first node, the input/output capability of the second node, and a value of the first authentication scheme, refer to Table 11.

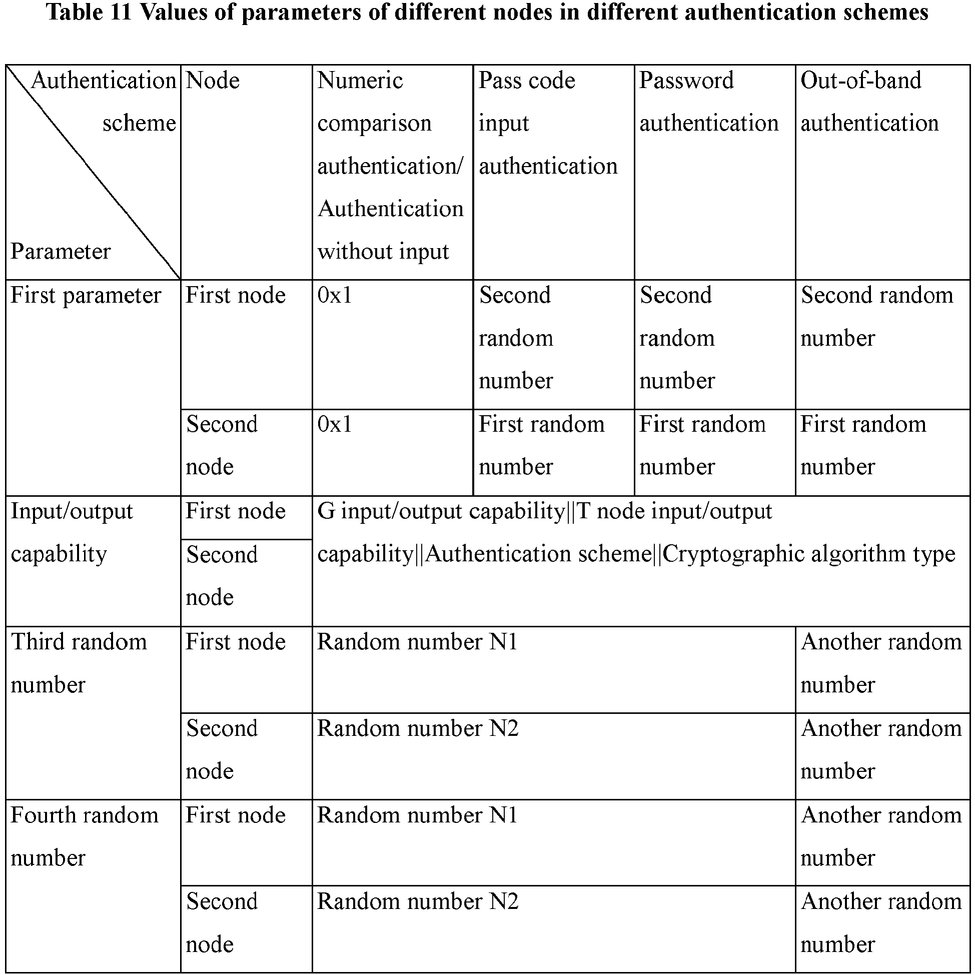

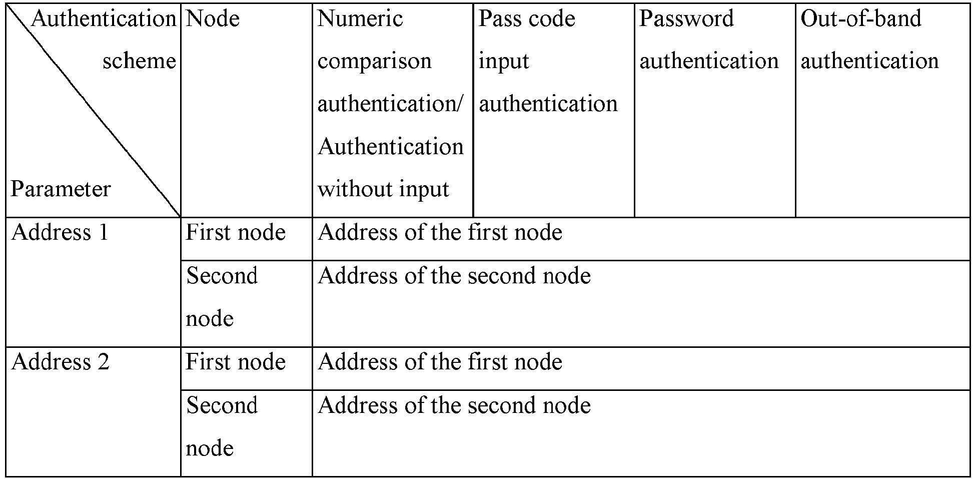

In a more specific implementation, the generating a third verification code based on the second key includes: generating a third key verification code based on the second key; and generating the third verification code based on the third key verification code.

The generating a third key verification code based on the second key may include: generating the third key verification code based on the second key, the third random number, the fourth random number, the address of the first node, and the address of the second node. For example, a value of the third key verification code meets any one of the following:
AES-CMAC (DH key2, N1, N2, Address1, Address2);
HMAC-SM3 (DH key2, N1, N2, Address1, Address2);
AES-CMAC (DH key2, N1, N2, Address1, Address2) + HMAC-SM3 (DH key2, N1, N2, Address1, Address2);
AES-CMAC is a cryptographic algorithm; HMAC-SM3 is another cryptographic algorithm; and DH key2 is a second key, for example, a DH key; N1 is the third random number; N2 is the fourth random number; Address1 is the address of the first node; and Address2 is the address of the second node.

The generating the third verification code based on the third key verification code may include: generating the third verification code based on the third key verification code, the first parameter, the second parameter, the third random number, the fourth random number, the address of the first node, and the address of the second node. For example, a value of the third verification code meets any one of the following:
AES-CMAC (third key verification code, S1, S2, N1, N2, Address1, Address2);
HMAC-SM3 (third key verification code, S1, S2, N1, N2, Address1, Address2);
AES-CMAC (third key verification code, S1, S2, N1, N2, Address1, Address2) + HMAC-SM3 (third key verification code, S1, S2, N1, N2, Address1, Address2);
AES-CMAC is a cryptographic algorithm; HMAC-SM3 is another cryptographic algorithm; S1 is the first parameter; S2 is the second parameter; N1 is the third random number; N2 is the fourth random number; Address1 is the address of the first node; and Address2 is the address of the second node.

S205: The second node compares the first verification code with the third verification code. When the first verification code is the same as the third verification code, it is determined that the first verification code is correct, pairing between the first node and the second node is allowed, and step S206 is performed; or when the first verification code is different from the third verification code, it is determined that the first verification code is incorrect, and pairing between the first node and the second node is not allowed, and the process ends.

S206: The second node sends the second verification code to the first node. Correspondingly, the first node receives the second verification code sent by the second node.

S207: The first node generates a fourth verification code based on the first key.

In a specific implementation, the generating a fourth verification code based on the first key includes: generating the fourth verification code based on the first key according to a cryptographic algorithm.

In a specific implementation, the generating a fourth verification code based on a first key includes: generating the fourth verification code based on one or more of the first key, at least two random numbers, an address of the first node, an address of the second node, an input/output capability of the first node, an input/output capability of the second node, a first authentication scheme, or a cryptographic algorithm type.

In a specific implementation, the generating a fourth verification code based on a first key includes: generating the fourth verification code based on one or more of the first key, at least two random numbers, a first parameter, a second parameter, an address of the first node, an address of the second node, an input/output capability of the first node, an input/output capability of the second node, a first authentication scheme, or a cryptographic algorithm type.

In a more specific implementation, the generating a fourth verification code based on a first key includes: generating a fourth key verification code based on the first key; and generating the fourth verification code based on the fourth key verification code.

The generating a fourth key verification code based on the first key may include: generating the fourth key verification code based on the first key, the third random number, the fourth random number, the address of the first node, and the address of the second node. For example, a value of the fourth key verification code meets any one of the following:
AES-CMAC (DH key1, N1, N2, Address1, Address2);
HMAC-SM3 (DH key1, N1, N2, Address1, Address2);
AES-CMAC (DH key1, N1, N2, Address1, Address2) + HMAC-SM3 (DH key1, N1, N2, Address1, Address2);
AES-CMAC is a cryptographic algorithm; HMAC-SM3 is another cryptographic algorithm; and DH key1 is a first key, for example, a DH key; N1 is the third random number; N2 is the fourth random number; Address1 is the address of the first node; and Address2 is the address of the second node.

The generating the fourth verification code based on the fourth key verification code may include: generating the fourth verification code based on the fourth key verification code, the third parameter, the fourth parameter, the third random number, the fourth random number, the address of the first node, and the address of the second node. For example, a value of the fourth verification code meets any one of the following:
AES-CMAC (fourth key verification code, S3, S4, N1, N2, Address1, Address2);
HMAC-SM3 (fourth key verification code, S3, S4, N1, N2, Address1, Address2);
AES-CMAC (fourth key verification code, S3, S4, N1, N2, Address1, Address2) + HMAC-SM3 (fourth key verification code, S3, S4, N1, N2, Address1, Address2);
AES-CMAC is a cryptographic algorithm; HMAC-SM3 is another cryptographic algorithm; S3 is the third parameter; S4 is the fourth parameter; N1 is the third random number; N2 is the fourth random number; Address1 is the address of the first node; and Address2 is the address of the second node.

S208: The first node compares the second verification code with the fourth verification code. If the second verification code is the same as the fourth verification code, if it is determined that the second verification code is correct, and pairing between the first node and the second node is allowed; or if it is determined that the first node and the second node are successfully paired, the process ends. If the second verification code is different from the fourth verification code, it is determined that the second verification code is incorrect, and pairing between the first node and the second node is not allowed, and the process ends.

It may be understood that a name of a procedure (for example, a verification code verification process) and a name of information (for example, a pairing request and a pairing response) that are used in this embodiment are merely examples, and may be replaced with any possible name in actual application.

In the foregoing example, step S201A and step S202A are performed independently relative to step S201B and step S202B. Therefore, a possible execution sequence includes: step S201A and step S201B are simultaneously performed, step S202A and step S202B are simultaneously performed, step S201A is performed before or after step S201B, step S202A is performed before or after step S202B, or the like. This is not specifically limited herein.

It may be understood that the first pairing procedure may include the password verification process shown in FIG. 6, may include the verification code verification process shown in FIG. 7, or may include both the password verification process shown in FIG. 6 and the verification code verification process shown in FIG. 7. For example, the password verification process shown in FIG. 6 is first performed, and then the verification code verification process shown in FIG. 7 is performed; or the verification code verification process shown in FIG. 7 is first performed, and then the password verification process shown in FIG. 6 is performed. This is not specifically limited herein.

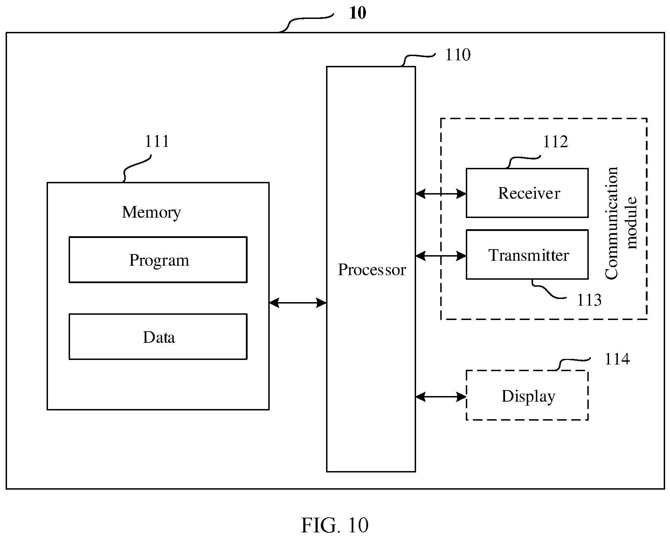

FIG. 10 is a schematic diagram of a structure of an apparatus according to an embodiment of this application. The apparatus 10 includes at least a processor 110, a memory 111, a receiver 112, and a transmitter 113. The receiver 112 and the transmitter 113 may also be replaced with communication interfaces, and are configured to provide an information input and/or an information output for the processor 110. Optionally, the memory 111, the receiver 112, the transmitter 113, and the processor 110 are connected or coupled through a bus. Optionally, in some possible embodiments, the apparatus 10 further includes a display 114, and the display 114 is connected to the processor 110 through a bus. The apparatus 10 may be a cockpit domain controller (cockpit domain controller, CDC) of a vehicle, or an element in a CDC or the device, like a chip or an integrated circuit. The CDC may also be referred to as a head unit. Herein, the head unit may be used as an example to describe hardware of the apparatus 10.

The receiver 112 is configured to receive data from at least one terminal device, for example, a voice signal or an image signal.

The transmitter 113 is configured to send data to the at least one terminal device, for example, a voice signal or an image signal.

The receiver 112 and the transmitter 113 may include an antenna and a chip set that are configured to communicate with a terminal device, a sensor, or another physical device by using a signal transmission entity like an optical fiber or by using an air interface. The transmitter 113 and the receiver 112 form a communication module. The communication module may be configured to receive and send information through one or more other types of wireless communication (for example, a protocol). The wireless communication includes Bluetooth, IEEE 802.11 communication protocol, cellular technology, worldwide interoperability for microwave Access (worldwide interoperability for microwave Access, WiMAX), long term evolution (long term evolution, LTE), ZigBee protocol, dedicated short range communications (dedicated short range communications, DSRC), radio frequency identification (radio frequency identification, RFID) communication, universal short range communication technology, in-vehicle universal short range communication technology, any other short range communication technology that may exist or the like.

The display 114 is configured to receive a user input, and display information entered by a user and information provided by the head unit for the user. The display 114 may be a liquid crystal display (liquid crystal display, LCD), an organic or inorganic light emitting diode (organic light-emitting diode, OLED), an active matrix organic light emitting diode (active matrix/organic light emitting diode, AMOLED) panel, or the like.

The processor 110 may include one or more general-purpose processors, for example, a central processing unit (central processing unit, CPU), or a combination of a CPU and a hardware chip. The hardware chip may be an application-specific integrated circuit (application-specific integrated circuit, ASIC), a programmable logic device (programmable logic device, PLD), or a combination thereof. The PLD may be a complex programmable logic device (complex programmable logic device, CPLD), a field-programmable gate array (field-programmable gate array, FPGA), generic array logic (generic array logic, GAL), or any combination thereof.

The memory 111 may include a volatile memory (volatile memory), for example, a random access memory (random access memory, RAM). The memory 111 may alternatively include a non-volatile memory (non-volatile memory), for example, a read-only memory (ROM), a flash memory (flash memory), a hard disk drive (hard disk drive, HDD), or a solid-state drive (solid-state drive, SSD). The memory 111 may alternatively include a combination of the foregoing types of memories. The memory 111 may store a program and data. The stored program includes a program corresponding to a password verification process, a program corresponding to a verification code verification process, and the like. The stored data includes a first password, a second password, a first random number to a fourth random number, a first parameter, a second parameter, an address of a first node, an address of a second node, a cryptographic algorithm, and the like. The memory 111 may exist independently, or may be integrated into the processor 110.

In embodiments of this application, the processor 110 is specifically configured to invoke the program code and data in the memory 111, to perform the method of the first node or the second node that is described in the embodiments in FIG. 2, FIG. 3A to FIG. 3B, FIG. 5, FIG. 6, and FIG. 7.

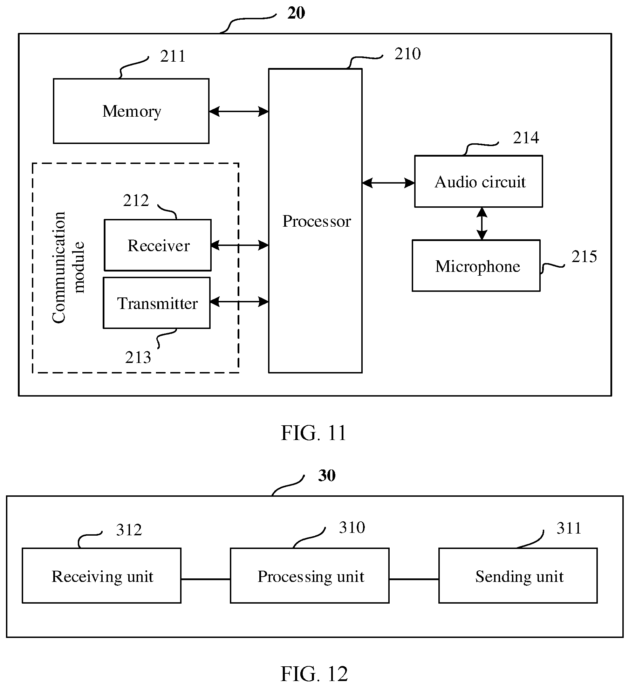

FIG. 11 is a schematic diagram of a structure of an apparatus according to an embodiment of this application. The apparatus 20 includes at least a processor 210, a memory 211, a receiver 212, a transmitter 213, an audio circuit 214, and a microphone 215. The receiver 212 and the transmitter 213 may also be replaced with communication interfaces, and are configured to provide an information input and/or an information output for the processor 210. Optionally, the memory 211, the receiver 212, the transmitter 213, the audio circuit 214, the microphone 215, and the processor 210 are connected or coupled through a bus. The apparatus 20 may be a vehicle-mounted device (for example, a speaker, a microphone, a camera, or a display), a non-vehicle-mounted device (for example, a mobile phone, or a headset), another device that can communicate with the apparatus 10, or an element in the foregoing device, for example, a chip or an integrated circuit. Herein, the vehicle-mounted device may be used as an example to describe hardware of the apparatus 20.

The receiver 212 is configured to receive data, for example, an audio signal or a voice signal.

The transmitter 213 is configured to send data to the CDC, for example, an audio signal or a voice signal.

The receiver 212 and the transmitter 213 may include an antenna and a chipset configured to communicate with the CDC or another physical device in a vehicle directly or through an air interface. The receiver 212 and the transmitter 213 form a communication module. The communication module may be configured to receive and send information through one or more other types of wireless communication (for example, a protocol). The wireless communication includes Bluetooth, IEEE 802.11 communication protocol, cellular technology, worldwide interoperability for microwave Access (worldwide interoperability for microwave Access, WiMAX), long term evolution (long term evolution, LTE), ZigBee protocol, dedicated short range communication (dedicated short range communication, DSRC), radio frequency identification (radio frequency identification, RFID) communication, universal short range communication technology, in-vehicle universal short range communication technology, any other short range communication technology that may exist or the like.

The microphone 215 converts collected audio data (for example, a voice signal) into an electrical signal corresponding to the audio data, and outputs the electrical signal to the audio circuit 214.

The audio circuit 214 converts the received electrical signal output by the microphone 215 into corresponding audio data, and outputs the audio data to the processor 210 for subsequent processing.

The processor 210 may include one or more general-purpose processors, for example, a central processing unit (central processing unit, CPU), or a combination of a CPU and a hardware chip. The hardware chip may be an application-specific integrated circuit (application-specific integrated circuit, ASIC), a programmable logic device (programmable logic device, PLD), or a combination thereof. The PLD may be a complex programmable logic device (complex programmable logic device, CPLD), a field-programmable gate array (field-programmable gate array, FPGA), generic array logic (generic array logic, GAL), or any combination thereof.

The memory 211 may include a volatile memory (volatile memory), for example, a random access memory (random access memory, RAM). The memory 211 may alternatively include a non-volatile memory (non-volatile memory), for example, a read-only memory (ROM), a flash memory (flash memory), a hard disk drive (hard disk drive, HDD), or a solid-state drive (solid-state drive, SSD). The memory 211 may alternatively include a combination of the foregoing types of memories. The memory 211 may store a program and data. The stored program includes a program corresponding to a password verification process, a program corresponding to a verification code verification process, and the like. The stored data includes a first password, a second password, a first random number to a fourth random number, a first parameter, a second parameter, an address of a first node, an address of a second node, a cryptographic algorithm, and the like. The memory 211 may exist independently, or may be integrated into the processor 210.

In embodiments of this application, the processor 210 is specifically configured to invoke the program code and data in the memory 211, to perform the method of the first node or the second node that is described in the embodiments in FIG. 2, FIG. 3A to FIG. 3B, FIG. 5, FIG. 6, and FIG. 7.

FIG. 12 is a schematic diagram of a functional structure of an apparatus according to an embodiment of this application. The apparatus 30 includes a processing unit 310, a sending unit 311, and a receiving unit 312. The apparatus 30 may be implemented by using hardware, software, or a combination of software and hardware.

The processing unit 310 is configured to obtain a first password and a first random number, and generate a first acknowledgment code of a first node based on the first password and the first random number. The sending unit 311 is configured to send the first acknowledgment code and the first random number to a second node. The receiving unit 312 is configured to receive a second acknowledgment code and a second random number from the second node. The processing unit 310 is further configured to generate a third acknowledgment code corresponding to the second node based on the second random number. The processing unit 310 is further configured to: if the second acknowledgment code is the same as the third acknowledgment code, determine that the second acknowledgment code is correct.

Functional modules of the apparatus 30 may be configured to perform the method on the first node side described in the embodiment in FIG. 6. In this case, the processing unit 310 may be configured to perform S101A, S102A, S104, and S105; the sending unit 311 may be configured to perform S106; and the receiving unit 312 may be configured to perform S103 in the embodiment in FIG. 6. Functional modules of the apparatus 30 may be configured to perform the method on the second node side described in the embodiment in FIG. 6. In this case, the processing unit 310 may be configured to perform S101B, S102B, S107, and S108; the sending unit 311 may be configured to perform S103; and the receiving unit 312 may be configured to perform S106 in the embodiment in FIG. 6.

Functional modules of the apparatus 30 may be configured to perform the method on the first node side described in the embodiment in FIG. 7. In this case, the processing unit 310 may be configured to perform S201A, S202A, S207, and S208; the sending unit 311 may be configured to perform S203; and the receiving unit 312 may be configured to perform S206 in the embodiment in FIG. 7. Functional modules of the apparatus 30 may be configured to perform the method on the second node side described in the embodiment in FIG. 7. In this case, the processing unit 310 may be configured to perform S201B, S202B, S204, and S205; the sending unit 311 may be configured to perform S206; and the receiving unit 312 may be configured to perform S203 in the embodiment in FIG. 7. For brevity of this specification, details are not described herein again in this application.

All or some of the foregoing embodiments may be implemented by using software, hardware, firmware, or any combination thereof. When software is used to implement the embodiments, all or some of the embodiments may be implemented in a form of a computer program product. The computer program product includes one or more computer instructions. When the computer program instructions are loaded and executed on the computer, the procedure or functions according to embodiments of this application are all or partially generated. The computer may be a general-purpose computer, a special-purpose computer, a computer network, or another programmable apparatus. The computer instructions may be stored in a computer-readable storage medium, or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line) or wireless (for example, infrared, radio, or microwave) manner. The computer-readable storage medium may be any usable medium accessible by the computer, or a data storage device, for example, a server or a data center, integrating one or more usable media. The usable medium may be a magnetic medium (for example, a floppy disk, a storage disk, or a magnetic tape), an optical medium (for example, a DVD), or a semiconductor medium (for example, a solid-state storage disk Solid State Disk, SSD).

## Claims

1. An information processing method, wherein the method comprises:
obtaining (S101A), by a first node, a first password and a first random number, wherein the first random number is a number randomly generated by the first node;
generating (S102A), by the first node, a first acknowledgment code of the first node based on the first password and the first random number, wherein the generating a first acknowledgement code comprises:
generating a first obfuscation code based on the first password; and
generating the first acknowledgment code of the first node based on the first random number and the first obfuscation code;
receiving (S103), by the first node, a second acknowledgment code and a second random number from a second node;
obtaining (S101B), by a second node, a second password and a second random number, wherein the second random number is a number randomly generated by the second node;
generating (S102B), by the second node, a second acknowledgment code of the second node based on the second password and the second random number, wherein the generating a second acknowledgement code comprises:
generating a second obfuscation code based on the second password; and
generating the second acknowledgment code of the second node based on the second random number and the second obfuscation code;
sending (S103), by the second node, the second acknowledgment code and the second random number to a first node;
generating (S104), by the first node, a third acknowledgment code corresponding to the second node based on the second random number, wherein the generating a third acknowledgement code comprises:
generating a third obfuscation code based on the first password; and
generating the third acknowledgment code of the second node based on the second random number and the third obfuscation code; and
if the second acknowledgment code is the same as the third acknowledgment code, determining that the second acknowledgment code is correct;
sending (S106), by the first node, the first acknowledgment code and the first random number to the second node;
receiving (S106), by the second node, a first acknowledgment code and a first random number from the first node;
generating (S107), by the second node, a fourth acknowledgment code corresponding to the first node based on the first random number, wherein the generating a first acknowledgement code comprises:
generating a fourth obfuscation code based on the second password; and
generating the fourth acknowledgment code of the first node based on the first random number and the fourth obfuscation code; and
if the first acknowledgment code is the same as the fourth acknowledgment code, determining that the first acknowledgment code is correct..

2. The method according to claim 1, wherein the generating a first acknowledgment code of the first node based on the first password and the first random number comprises:
generating the first acknowledgment code based on the first password and the first random number according to a cryptographic algorithm.

3. The method according to claim 1 or 2, wherein the generating a first acknowledgment code of the first node based on the first password and the first random number comprises:
generating the first acknowledgment code based on the first random number, the first password, a public key of the first node, and a public key of the second node.

4. The method according to any one of claims 1 to 3, wherein if the second acknowledgment code is correct, the method further comprises:
generating (S202A), by the first node, a first verification code based on a first key; and
if the first verification code is the same as a second verification code from the second node, determining that the second verification code is correct.

5. The method according to claim 4, wherein the generating a first verification code based on a first key comprises:
generating the first verification code according to the cryptographic algorithm and based on one or more of the first key, at least two random numbers, an address of the first node, an address of the second node, an input/output capability of the first node, an input/output capability of the second node, a first authentication scheme, or a cryptographic algorithm type.

6. The method according to claim 2 or claim 5, wherein the method further comprises:
sending, by the first node, first information to the second node, wherein the first information indicates the cryptographic algorithm.

7. The method according to claim 6, wherein the cryptographic algorithm belongs to a cryptographic algorithm set, and the method further comprises:
sending, by the first node, second information to the second node, wherein the second information indicates the cryptographic algorithm set; and
receiving, by the first node, third information from the second node, wherein the third information indicates the cryptographic algorithm set.

8. The method according to any one of claims 1 to 7, wherein the method further comprises:
sending, by the first node, fourth information to the second node, wherein the fourth information indicates that a first authentication scheme is password authentication.

9. A system comprising a first apparatus, and a second apparatus, wherein the first apparatus is a first node and the second apparatus is a second node, and the system is configured to perform the method according to any one of claims 1 to 8.

10. A computer-readable storage medium, wherein the computer-readable storage medium stores a computer program or instructions, and when the computer program or the instructions are executed by a communication system, the communication system performs the method according to any one of claims 1 to 8.

## Patentansprüche

1. Informationsverarbeitungsverfahren, wobei das Verfahren Folgendes umfasst:
Erhalten (S101A), durch einen ersten Knoten, eines ersten Passworts und einer ersten Zufallszahl, wobei die erste Zufallszahl eine Zahl ist, die zufällig durch den ersten Knoten erzeugt wird;
Erzeugen (S102A), durch den ersten Knoten, eines ersten Bestätigungscodes des ersten Knotens basierend auf dem ersten Passwort und der ersten Zufallszahl, wobei das Erzeugen eines ersten Bestätigungscodes Folgendes umfasst:
Erzeugen eines ersten Obfuskationscodes basierend auf dem ersten Passwort; und
Erzeugen des ersten Bestätigungscodes des ersten Knotens basierend auf der ersten Zufallszahl und dem ersten Obfuskationscode;
Empfangen (S103), durch den ersten Knoten, eines zweiten Bestätigungscodes und einer zweiten Zufallszahl von einem zweiten Knoten;
Erhalten (S101B), durch einen zweiten Knoten, eines zweiten Passworts und einer zweiten Zufallszahl, wobei die zweite Zufallszahl eine Zahl ist, die zufällig durch den zweiten Knoten erzeugt wird;
Erzeugen (S102B), durch den zweiten Knoten, eines zweiten Bestätigungscodes des zweiten Knotens basierend auf dem zweiten Passwort und der zweiten Zufallszahl, wobei das Erzeugen eines zweiten Bestätigungscodes Folgendes umfasst:
Erzeugen eines zweiten Obfuskationscodes basierend auf dem zweiten Passwort; und
Erzeugen des zweiten Bestätigungscodes des zweiten Knotens basierend auf der zweiten Zufallszahl und dem zweiten Obfuskationscode;
Senden (S103), durch den zweiten Knoten, des zweiten Bestätigungscodes und der zweiten Zufallszahl an einen ersten Knoten;
Erzeugen (S104), durch den ersten Knoten, eines dritten Bestätigungscodes, der dem zweiten Knoten entspricht, basierend auf der zweiten Zufallszahl, wobei das Erzeugen eines dritten Bestätigungscodes Folgendes umfasst:
Erzeugen eines dritten Obfuskationscodes basierend auf dem ersten Passwort; und
Erzeugen des dritten Bestätigungscodes des zweiten Knotens basierend auf der zweiten Zufallszahl und dem dritten Obfuskationscode; und
wenn der zweite Bestätigungscode gleich dem dritten Bestätigungscode ist, Bestimmen, dass der zweite Bestätigungscode korrekt ist;
Senden (S106), durch den ersten Knoten, des ersten Bestätigungscodes und der ersten Zufallszahl an den zweiten Knoten;
Empfangen (S106), durch den zweiten Knoten, eines ersten Bestätigungscodes und einer ersten Zufallszahl von dem ersten Knoten;
Erzeugen (S107), durch den zweiten Knoten, eines vierten Bestätigungscodes, der dem ersten Knoten entspricht, basierend auf der ersten Zufallszahl, wobei das Erzeugen eines ersten Bestätigungscodes Folgendes umfasst:
Erzeugen eines vierten Obfuskationscodes basierend auf dem zweiten Passwort; und
Erzeugen des vierten Bestätigungscodes des ersten Knotens basierend auf der ersten Zufallszahl und dem vierten Obfuskationscode; und
wenn der erste Bestätigungscode gleich dem vierten Bestätigungscode ist, Bestimmen, dass der erste Bestätigungscode korrekt ist.

2. Verfahren nach Anspruch 1, wobei das Erzeugen eines ersten Bestätigungscodes des ersten Knotens basierend auf dem ersten Passwort und der ersten Zufallszahl Folgendes umfasst:
Erzeugen des ersten Bestätigungscodes basierend auf dem ersten Passwort und der ersten Zufallszahl gemäß einem kryptografischen Algorithmus.

3. Verfahren nach Anspruch 1 oder 2, wobei das Erzeugen eines ersten Bestätigungscodes des ersten Knotens basierend auf dem ersten Passwort und der ersten Zufallszahl Folgendes umfasst:
Erzeugen des ersten Bestätigungscodes basierend auf der ersten Zufallszahl, dem ersten Passwort, einem öffentlichen Schlüssel des ersten Knotens und einem öffentlichen Schlüssel des zweiten Knotens.

4. Verfahren nach einem der Ansprüche 1 bis 3, wobei, wenn der zweite Bestätigungscode korrekt ist, das Verfahren ferner Folgendes umfasst:
Erzeugen (S202A), durch den ersten Knoten, eines ersten Verifizierungscodes basierend auf einem ersten Schlüssel; und
wenn der erste Verifizierungscode gleich einem zweiten Verifizierungscode von dem zweiten Knoten ist, Bestimmen, dass der zweite Verifizierungscode korrekt ist.

5. Verfahren nach Anspruch 4, wobei das Erzeugen eines ersten Verifizierungscodes basierend auf einem ersten Schlüssel Folgendes umfasst:
Erzeugen des ersten Verifizierungscodes gemäß dem kryptografischen Algorithmus und basierend auf einem oder mehreren von dem ersten Schlüssel, mindestens zwei Zufallszahlen, einer Adresse des ersten Knotens, einer Adresse des zweiten Knotens, einer Eingabe/Ausgabe-Fähigkeit des ersten Knotens, einer Eingabe/Ausgabe-Fähigkeit des zweiten Knotens, einem ersten Authentifizierungsschema oder einem Typ des kryptografischen Algorithmus.

6. Verfahren nach Anspruch 2 oder Anspruch 5, wobei das Verfahren ferner umfasst:
Senden, durch den ersten Knoten, von ersten Informationen an den zweiten Knoten, wobei die ersten Informationen den kryptografischen Algorithmus angeben.

7. Verfahren nach Anspruch 6, wobei der kryptografische Algorithmus zu einem Satz kryptografischer Algorithmen gehört und das Verfahren ferner Folgendes umfasst:
Senden, durch den ersten Knoten, von zweiten Informationen an den zweiten Knoten, wobei die zweiten Informationen den Satz kryptografischer Algorithmen angeben; und
Empfangen, durch den ersten Knoten, von dritten Informationen von dem zweiten Knoten, wobei die dritten Informationen den Satz kryptografischer Algorithmen angeben.

8. Verfahren nach einem der Ansprüche 1 bis 7, wobei das Verfahren ferner Folgendes umfasst:
Senden, durch den ersten Knoten, von vierten Informationen an den zweiten Knoten, wobei die vierten Informationen angeben, dass ein erstes Authentifizierungsschema eine Passwortauthentifizierung ist.

9. System, das eine erste Einrichtung und eine zweite Einrichtung umfasst, wobei die erste Einrichtung ein erster Knoten ist und die zweite Einrichtung ein zweiter Knoten ist und das System dazu ausgelegt ist, das Verfahren nach einem der Ansprüche 1 bis 8 durchzuführen.

10. Computerlesbares Speichermedium, wobei das computerlesbare Speichermedium ein Computerprogramm oder Anweisungen speichert, und wenn das Computerprogramm oder die Anweisungen durch ein Kommunikationssystem ausgeführt werden, das Kommunikationssystem das Verfahren nach einem der Ansprüche 1 bis 8 durchführt.

## Revendications

1. Procédé de traitement d'informations, dans lequel le procédé comprend :
l'obtention (S101A), par un premier nœud, d'un premier mot de passe et d'un premier numéro aléatoire, dans lequel le premier numéro aléatoire est un numéro généré aléatoirement par le premier nœud ;
la génération (S102A), par le premier nœud, d'un premier code d'accusé de réception du premier nœud sur la base du premier mot de passe et du premier numéro aléatoire, dans lequel la génération d'un premier code d'accusé de réception comprend :
la génération d'un premier code d'obfuscation sur la base du premier mot de passe ; et
la génération du premier code d'accusé de réception du premier nœud sur la base du premier numéro aléatoire et du premier code d'obfuscation ;
la réception (S103), par le premier nœud, d'un deuxième code d'accusé de réception et d'un second numéro aléatoire en provenance d'un second nœud ;
l'obtention (S101B), par un second nœud, d'un second mot de passe et d'un second numéro aléatoire, dans lequel le second numéro aléatoire est un numéro généré aléatoirement par le second nœud ;
la génération (S102B), par le second nœud, d'un deuxième code d'accusé de réception du second nœud sur la base du second mot de passe et du second numéro aléatoire, dans lequel la génération d'un deuxième code d'accusé de réception comprend :
la génération d'un deuxième code d'obfuscation sur la base du second mot de passe ; et
la génération du deuxième code d'accusé de réception du second nœud sur la base du second numéro aléatoire et du deuxième code d'obfuscation ;
l'envoi (S103), par le second nœud, du deuxième code d'accusé de réception et du second numéro aléatoire à un premier nœud ;
la génération (S104), par le premier nœud, d'un troisième code d'accusé de réception correspondant au second nœud sur la base du second numéro aléatoire, dans lequel la génération d'un troisième code d'accusé de réception comprend :
la génération d'un troisième code d'obfuscation sur la base du premier mot de passe ; et
la génération du troisième code d'accusé de réception du second nœud sur la base du second numéro aléatoire et du troisième code d'obfuscation ; et
si le deuxième code d'accusé de réception est le même que le troisième code d'accusé de réception, la détermination que le deuxième code d'accusé de réception est correct ;
l'envoi (S106), par le premier nœud, du premier code d'accusé de réception et du premier numéro aléatoire au second nœud ;
la réception (S106), par le second nœud, d'un premier code d'accusé de réception et d'un premier numéro aléatoire en provenance du premier nœud ;
la génération (S107), par le second nœud, d'un quatrième code d'accusé de réception correspondant au premier nœud sur la base du premier numéro aléatoire, dans lequel la génération d'un premier code d'accusé de réception comprend :
la génération d'un quatrième code d'obfuscation sur la base du second mot de passe ; et
la génération du quatrième code d'accusé de réception du premier nœud sur la base du premier numéro aléatoire et du quatrième code d'obfuscation ; et
si le premier code d'accusé de réception est le même que le quatrième code d'accusé de réception, la détermination que le premier code d'accusé de réception est correct.

2. Procédé selon la revendication 1, dans lequel la génération d'un premier code d'accusé de réception du premier nœud sur la base du premier mot de passe et du premier numéro aléatoire comprend :
la génération du premier code d'accusé de réception sur la base du premier mot de passe et du premier numéro aléatoire selon un algorithme cryptographique.

3. Procédé selon la revendication 1 ou 2, dans lequel la génération d'un premier code d'accusé de réception du premier nœud sur la base du premier mot de passe et du premier numéro aléatoire comprend :
la génération du premier code d'accusé de réception sur la base du premier numéro aléatoire, du premier mot de passe, d'une clef publique du premier nœud, et d'une clef publique du second nœud.

4. Procédé selon l'une quelconque des revendications 1 à 3, dans lequel, si le deuxième code d'accusé de réception est correct, le procédé comprend en outre :
la génération (S202A), par le premier nœud, d'un premier code de vérification sur la base d'une première clef ; et
si le premier code de vérification est le même qu'un second code de vérification en provenance du second nœud, la détermination que le second code de vérification est correct.

5. Procédé selon la revendication 4, dans lequel la génération d'un premier code de vérification sur la base d'une première clef comprend :
la génération du premier code de vérification selon l'algorithme cryptographique et sur la base d'un ou de plusieurs éléments parmi la première clef, au moins deux numéro aléatoires, une adresse du premier nœud, une adresse du second nœud, une capacité d'entrée/sortie du premier nœud, une capacité d'entrée/sortie du second nœud, un premier schéma d'authentification, ou un type d'algorithme cryptographique.

6. Procédé selon la revendication 2 ou la revendication 5, dans lequel le procédé comprend en outre :
l'envoi, par le premier nœud, de premières informations au second nœud, dans lequel les premières informations indiquent l'algorithme cryptographique.

7. Procédé selon la revendication 6, dans lequel l'algorithme cryptographique appartient à un ensemble d'algorithmes cryptographiques, et le procédé comprend en outre :
l'envoi, par le premier nœud, de deuxièmes informations au second nœud, dans lequel les deuxièmes informations indiquent l'ensemble d'algorithmes cryptographiques ; et
la réception, par le premier nœud, de troisièmes informations en provenance du second nœud, dans lequel les troisièmes informations indiquent l'ensemble d'algorithmes cryptographiques.

8. Procédé selon l'une quelconque des revendications 1 à 7, dans lequel le procédé comprend en outre :
l'envoi, par le premier nœud, de quatrièmes informations au second nœud, dans lequel les quatrièmes informations indiquent qu'un premier schéma d'authentification est une authentification de mot de passe.

9. Système comprenant un premier appareil, et un second appareil, dans lequel le premier appareil est un premier nœud et le second appareil est un second nœud, et le système est configuré pour réaliser le procédé selon l'une quelconque des revendications 1 à 8.

10. Support de stockage lisible par ordinateur, dans lequel le support de stockage lisible par ordinateur stocke un programme d'ordinateur ou des instructions, et, lorsque le programme d'ordinateur ou les instructions sont exécutés par un système de communication, le système de communication réalise le procédé selon l'une quelconque des revendications 1 à 8.
